(19) Europäisches Patentamt
European Patent Office
Office européen des brevets

(11) Publication number: **0 111 013**
**B1**

(12) **EUROPEAN PATENT SPECIFICATION**

(45) Date of publication of patent specification: **23.07.86**

(51) Int. Cl.$^4$: **C 09 K 5/00**

(21) Application number: **82111209.1**

(22) Date of filing: **03.12.82**

(54) **Glycol compositions containing phosphorous-modified silane.**

(43) Date of publication of application:
**20.06.84 Bulletin 84/25**

(45) Publication of the grant of the patent:
**23.07.86 Bulletin 86/30**

(84) Designated Contracting States:
**BE DE FR GB IT NL SE**

(58) References cited:
**EP-A-0 029 728**
**GB-A-2 018 266**
**US-A-4 333 843**

(73) Proprietor: **THE DOW CHEMICAL COMPANY**
**2030 Dow Center Abbott Road P.O. Box 1967**
**Midland, MI 48640 (US)**

(72) Inventor: **Jernigan, Robert Thorne**
**103 Ash Lane**
**Lake Jackson State of Texas 77566 (US)**

(74) Representative: **Casalonga, Axel et al**
**BUREAU D.A. CASALONGA OFFICE JOSSE & PETIT Morassistrasse 8**
**D-8000 München 5 (DE)**

**EP 0 111 013 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention provides a gellation resistant aqueous glycol or glycol ether composition containing a phosphorous modified silane.

Antifreeze compositions containing glycols and various corrosion inhibitors are well known in the prior art as is illustrated by U.S. Patent 3,362,910, Ordelt, January 9, 1968. The use of the relatively inexpensive and effective borax and silicates in glycol formulations is well illustrated by these patents. It is conventional in this art to make a glycol concentrate which is then sold to end users for use as a coolant in automotive radiators after dilution with water.

In the past, it has been found that glycol concentrates prepared using conventional corrosion inhibitors such as borax and silicates had a tendency to develop irreversible silicate gels upon standing for a period of time in a warehouse or a store. The end user, when he attempted to pour the glycol concentrate into his automotive radiator found that the concentrate had developed "slugs" or gels which either did not pour readily or which tumbled out in discrete masses along with the liquid. The present invention was developed to eliminate this gel formation.

In U.S. Patent 4,149,985 Wilson, April 17, 1979, there is disclosed that a gellation-resistant glycol composition containing borate and silicate additives can be made wherein the order of addition of the additives and the pH of the solution is closely controlled in order to obtain the gellation-resistant formulation. This is difficult to control during production.

In U.S. Patent 4,287,077, Wing, September 1, 1981, there is disclosed a gellation resistant glycol composition which contains an effective amount of a silicone containing polyoxyalkylene functionality. While these silicone compounds are effective, it has been found that production of glycol compositions containing these compounds is limited to the addition of the compounds before the addition of the alkali metal silicates which are present in the glycol compositions to enhance the corrosion resistance of the compositions. The present invention is thus more useful in that the phosphorous-silane compounds can be added anytime during production.

In British Patent 2,018,266A dated October 17, 1979, there is disclosed the use of alkali metal salts of polymeric silylalkylphosphonates as metal corrosion inhibitors for alcoholic or glycolic compositions.

In U.S. Patent 4,333,843, Wing et al., June 6, 1982, there are disclosed glycol compositions which are gellation-resistant due to the use of an effective amount of the hydrolyzate of compounds having the formula

$$(RO)_3Si—(CH_2)_n—O—P(O)(CH_3)—OR$$

where R is an alkyl group of 1—4 carbons and n is an integer of 1—4. It is believed that these hydrolyzates are the same polymers described in the above British patent. However, the commercial use of these polymers is severely curtailed by their high cost.

U.S. Patent No. 3,121,692, Morehouse et al., February 18, 1964 (Cols. 18 & 19) discloses gellation-resistant glycol formulations containing sodium silicate and amino silanes. However, it has been found that the compounds used herein are much more effective than the patented amino silanes as anti-gellation additives.

The following patents show related compositions containing siloxanes and the storage stability thereof but they do not show the use of alkali metal silicates, glycol, and gellation inhibitors:

U.S. 3,234,144 (March 26, 1962), Col. 12
U.S. 3,248,329 (April 26, 1966), Col. 19
U.S. 3,312,622 (April 4, 1967), Col. 21 & 22
U.S. 3,337,496 (August 22, 1967), Col. 9
U.S. 3,341,469 (September 12, 1967), Col. 9

The present invention is a gellation-resistant glycol composition comprising

(A) 85 to 98 percent by weight of an alkylene glycol, an alkylene glycol ether, or mixtures thereof,
(B) 0.025 to 1.0 percent by weight of an alkali metal silicate,
(C) 0.001 to 5.0 percent by weight of one of the following:

(I) $(RO)_{3-m}(R')_mSi—R^2—O—P(O)(OR^3)(R^4)$,
(II) $[(RO)_{3-m}(R')_mSi—R^2—O]_2P(O)(R^4)$, or
(III) mixtures of I and II,

wherein m is 0—2
R, $R^3$, $R^4$ are alkyl groups of 1—4 carbons,
R' is an alkyl group of 1—4 carbons, phenyl, and aralkyl group of 7—10 carbons, and
$R^2$ is an alkylene group of 1—4 carbons.
(D) an effective amount of a non-silicate corrosion inhibitor
(E) water

The present invention also includes a method for making gellation resistant glycol compositions containing water, alkali metal silicates, and other corrosion inhibitors which comprises adding to the glycol

compositions 0.001 to 5.0 per cent by weight, to improve gellation resistance, of the compounds having the formulas,

(I) $(RO)_{3-m}(R')_mSi—R^2—O—P(O)(OR^3)(R^4)$,
(II)$[(RO)_{3-m}(R')_mSi—R^2—O]_2P(O)(R^4)$, or
(III) mixtures of I and II,

wherein m is 0—2
R, $R^3$, $R^4$ are alkyl groups of 1—4 carbons,
R' is an alkyl group of 1—4 carbons, phenyl, and aralkyl group of 7—10 carbons, and
$R^2$ is an alkylene group of 1—4 carbons.

Examples of compounds within the scope of I above when m is zero are methyl 3-(trimethoxysilyl)propyl methylphosphonate, butyl 2-(triethoxysilyl)ethyl methylphosphonate, propyl 3-(tripropoxysilyl)propyl methylphosphonate, and methyl 4-(trimethoxysilyl)butyl methylphosphonate.

Examples of compounds within the scope of I above when m is one are methyl 3-(methyldimethoxysilyl)propyl methyl phosphonate, methyl 3-(methyldiethoxysilyl)propyl methylphosphonate, methyl 3-(dimethoxymethylsilyl)propyl ethylphosphonate, butyl 2-(dimethoxymethylsilyl)ethyl propylphosphonate, propyl 3-(dipropoxymethylsilyl)propyl methylphosphonate, and methyl 4-(dimethoxymethylsilyl)butyl ethylphosphonate.

Examples of compounds within the scope of I above when m is two are methyl 3-(dimethylmethoxysilyl)propyl methyl phosphonate, methyl 3-(dimethylethoxysilyl)propyl methyl phosphonate, methyl 3-(dimethylethoxysilyl)propyl butylphosphonate, butyl 2-(methoxydimethylsilyl)ethyl ethylphosphonate, propyl 3-(ethoxydiethylsilyl)propyl methylphosphonate, and ethyl 4-(methoxydimethylsilyl)butyl ethyl phosphonate.

Examples of compounds within the scope of II above are bis-[3-(trimethoxysilyl)propyl] methylphosphonate, bis-[2-(trimethoxysilyl)ethyl] methylphosphonate, bis-[3-(tripropoxysilyl)propyl] methylphosphonate, bis-[4-(trimethoxysilyl)butyl] methylphosphonate, bis-[3-(methyl dimethoxysilyl)propyl] methylphosphonate, bis-[3-(methyl-diethoxy silyl)propyl] methyl phosphonate, bis-[3-(dimethylmethoxysilyl)propyl] methyl phosphonate, and bis-[3-(dimethylethoxysilyl)propyl] methyl phosphonate.

Examples of mixtures within the scope of III above are the crude reaction products produced by reacting a trialkoxysilane, a dialkoxyalkylsilane or a alkoxydialkyl silane each having an omegahaloalkylene group with a dialkyl alkylphosphonate.

These compounds can be prepared by a catalytic process as shown in U.S. Patent 4,093,641, Plueddemann, June 6, 1978, or can readily be prepared by the processess described in the above patent in Column 1. Another non-catalytic process is described below.

These anti-gellation additives are effective in the presence of the other well-known corrosion inhibitors generally present in such compositions such as alkali metal borates, mercaptobenzotriazoles, nitrates, nitrites, phosphates and benzoates.

The present invention is thus a single phase composition comprising
(A) 85 to 98 percent by weight of an alkylene glycol, an alkylene glycol ether, or mixtures thereof,
(B) 0.025 to 1.0 percent by weight of an alkali metal silicate,
(C) 0.001 to 5.0 percent by weight of one of the following:

(I) $(RO)_{3-m}(R')_mSi—R^2—O—P(O)(OR^3)(R^4)$,
(II) $[(RO)_{3-m}(R')Si—R^2—O]_2P(O)(R^4)$, or
(III) mixtures of I and II,

wherein m is 0—2
R, $R^3$, $R^4$ are alkyl groups of 1—4 carbons,
R' is an alkyl group of 1—4 carbons, phenyl, and aralkyl group of 7—10 carbons, and
$R^2$ is an alkylene group of 1—4 carbons.
(D) an effective amount of a non-silicate corrosion inhibitor
(E) water

A preferred group of additive compounds are those having the formula,

(I) $(RO)_3Si{+}CH_2{+}_nO—P(O)(CH_3)—OR$,
(II) $[(RO)_3Si{+}CH_2{+}_nO—]_2—P(O)(CH_3)$, or
(III) mixtures of I and II,

wherein R is an alkyl group of 1—4 carbon atoms, and n is an integer of 1—4.

The glycols and glycol ethers which can be used in the present composition are (1) glycols such as ethylene glycol, diethylene glycol, propylene glycol, dipropylene glycol, (2) glycol monoethers such as the methyl, ethyl, propyl and butyl ether of ethylene glycol, diethylene glycol, propylene glycol and dipropylene glycol, and (3) glycol diethers such as the methyl and ethyl diethers of ethylene glycol,

diethylene glycol, and dipropylene glycol. Ethylene glycol, propylene glycol, and the monomethyl ether of propylene glycol, i.e., methoxypropanol are particularly preferred.

The following are examples of known corrosion inhibitors and additives which can be used in the present invention in conjunction with the above silanes:

Alkali metal silicates such as sodium metasilicate, potassium metasilicate and lithium metasilicate; alkali metal borates such as sodium tetraborate, potassium tetraborate, sodium metaborate, and potassium metaborate; alkali metal mercaptobenzothiazoles, and alkali metal tolyltriazoles; alkali metal nitrates such as sodium nitrate, potassium nitrate, and alkali metal nitrites such as potassium and sodium nitrite; and alkali metal phosphates such as sodium phosphate and potassium phosphate, alkali metal benzoates, and various dyes.

In the process of making the compositions of this invention, one or more of the above glycols are mixed with one of the above non-silicate corrosion inhibitors and sufficient amounts of mercaptobenzothiazoles, tolyltriazoles, nitrates, and phosphate inhibitors necessary for corrosion protection. The pH of the solution is then adjusted to the desired pH range of 5—12, and preferably 8—11, by adding a basic inorganic compound in aqueous solution such as an alkali metal hydroxide, carbonate, or phosphate. One of the above alkali metal silicates is then added to produce a corrosion and gellation resistant glycol composition. An effective amount of one of the above silanes or mixtures thereof can be added anytime during the above process.

For the purposes of this invention, an effective amount of the above silanes which will give a gellation resistant glycol composition is an amount ranging from about 0.001 to about 5.0 percent by weight, preferably in the range from 0.002 to 0.5 percent by weight and most preferably in the range from 0.005 to 0.2 percent by weight.

The use of the above corrosion inhibitors when used in a corrosion inhibiting amount is well known in the prior art. Of course, this amount will vary for each inhibitor. In general the amounts used for the silicates and borates are 0.025 to 1.0 percent by weight based on the total solution weight of silicates and 0.1 to 2.0 percent by weight of borates. Preferably, these ranges are 0.05 to 0.50 percent for the silicates and 0.5 to 1.6 percent for the borates.

In this invention, it has been found that when the borate levels are at the higher end of the desired range (1.0 to 2.0 percent by weight), the amount of silicate that can be added must be in the lower end of the desired range of silicate level (0.025 to 0.3 percent by weight). It is not possible to set forth exactly the amount of silicate to be used in each instance due to the complicating influence of the other corrosion inhibitors such as the aforementioned triazoles, nitrates, nitrites, and phosphates. However, one can by a simple accelerated aging test determine the amount of silane which when added will give the desired gellation resistance.

An accelerated aging test was used in the examples and controls that follow to estimate the gellation resistance of the compositions. It was performed by placing a sample of the glycol composition in an oven controlled at 80, 90, or 95°C and measuring the number of hours or days before the composition begins to gel.

The invention is illustrated by the following preparation, examples, and controls.

Preparation 1

Into a 3-liter round bottom flask were weighed 800.0 g (4 moles), 3-chloropropyl trimethoxysilane and 1000.0 g (8 moles) dimethylmethylphosphonate. A magnetic stirrer was placed in the flask and it was fitted with a reflux condenser. The contents were heated to 187°C over a period of 45 minutes. At this time evolution of a gas was observed by means of a mineral oil-filled bubbler connected to the top of the condenser. The system was maintained at this temperature for 22.5 hours. At this time, no further gas evolution was observed through the bubbler, thus the heat was removed and the reaction mixture allowed to cool to room temperature. When cool, 1436.9 g of a pale yellow-brown liquid were recovered from the flask. Gas chromatographic analysis of this crude reaction product showed it to have the following composition: dimethyl methyl phosphonate, 44.4%; methyl 3-(trimethoxysilyl)propyl methyl phosphonate, 39.6%; bis-[3-trimethoxysilyl)propyl]methyl phosphonate, 7.2%. Two other small unidentified peaks were observed. One coming before dimethyl methyl phosphonate and the other coming after bis-[3-(trimethoxysilyl)propyl]methyl phosphonate. A portion of this sample was distilled *in vacuo* at about 2 mm Hg pressure. Unreacted dimethylmethylphosphonate was recovered as the fraction boiling at about 30—50°C. The fraction boiling at 112—114°C was identified as methyl 3-(trimethoxysilyl)propyl methylphosphonate, which has the formula

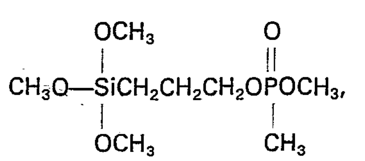

by gas chromatography, NMR and mass spectrometry. Gas chromatographic analysis of the fraction boiling at about 160—200°C showed it to be mainly bis-[3-(trimethoxysilyl)propyl] methyl phosphonate

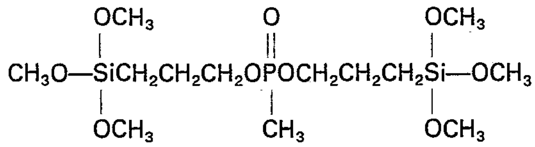

by comparison to a standard sample prepared by the method described in U.S. Patent 4,093,641.

Examples 1—8

Into 917.0 g ethylene glycol were added 52.0 g of a 25% by weight sodium metaborate pentahydrate solution in ethylene glycol. A 33 1/3% aqueous sodium nitrate solution (6.0 g) was added and stirred until well dissolved, followed by 2.0 g of a 50% aqueous solution of sodium tolyltriazole. The pH of the solution was then adjusted to 8.4—8.5 with a 10% aqueous caustic solution. Aqueous sodium metasilicate pentahydrate (3.0 g in 10.0 g water) was added to the mixture. The gel stability of this solution at 80°C and 90°C as well as those to which various stabilizing agents were added are presented in Table I wherein the time in days is the amount of time before the first visible formation of a gel was observed.

TABLE I

| Example | Stabilizer | (%) | Stability (days) 80°C | 90°C |
|---|---|---|---|---|
| Control | none | — | 0.8 | 0.5 |
| 1. | 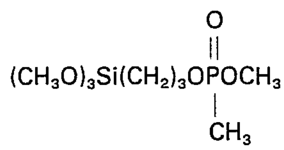 | 0.003 | 3 | 1.7 |
| 2. | 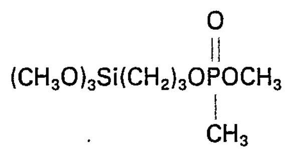 | 0.02 | 8 | 5 |
| 3. | 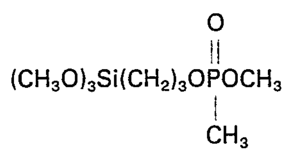 | 0.2 | >30 | >30 |
| 4. | 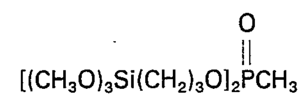 | 0.002 | 4 | 1.7 |
| 5. | 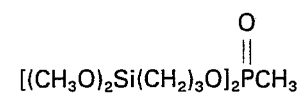 | 0.02 | 9 | >30 |
| 6. | 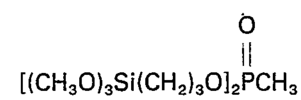 | 0.2 | >30 | >30 |
| 7. | Crude mixture of example 1 | 0.02 | 3 | 1.7 |
| 8. | Crude mixture of example 1 | 2 | >30 | >30 |

From a consideration of the data presented in Table I, it is evident that amounts of methyl 3-(trimethoxysilyl)propyl methylphosphonate and bis-[3-(trimethoxysilyl)propyl] methyl phosphonate as low as 30 and 20 ppm are effective additives to increase the gel stability over the control. While not as effective as the above pure silanes, the crude reaction mixture is also effective as a gel inhibitor.

Examples 9—13

These examples demonstrate the utility of these phosphorous-modified silanes by showing their effectiveness even when added after the silicate and other corrosion inhibitors. Five samples of a commercial silicate-containing antifreeze were evaluated for stability at 95°C. To each lot was added 0.02% of the crude reaction mixture described in preparation 1. The stability of each sample was also measured under identical conditions. These data are presented in Table II.

TABLE II

| Example | Antifreeze lot | Gel time 95°C (days) | |
|---|---|---|---|
| | | Control | Control plus Stabilizer* |
| 9 | A | 1 | 4.7 |
| 10 | B | 0.7 | 4.1 |
| 11 | C | 0.7 | 2.8 |
| 12 | D | 1 | 5.7 |
| 13 | E | 1 | 4.7 |

*Control plus 0.02% by weight of the crude reaction product of preparation #1.

Examples 14—18

A particular lot of a commercial antifreeze was found to have an oven stability at 95°C of 6 hours. Addition of small amounts of methyl 3-(trimethylsilyl)propyl methylphosphonate to this unstable coolant was found to greatly increase the time required for gel formation under these conditions. These data are presented in Table III.

TABLE III

| Examples | Methyl 3-(trimethylsilyl)propyl methylphosphonate (ppm) | Gel time @95°C (days) |
|---|---|---|
| Control | 0 | 0.25 |
| 14 | 20 | 2 |
| 15 | 50 | 2 |
| 16 | 100 | 2 |
| 17 | 200 | 10 |
| 18 | 1000 | 14 |

Examples 19 and 20

The procedure in the preceding Examples was repeated with the only change being in the stabilizer which was added to the commercial antifreeze. It was found in Example 19 that the addition of 200 ppm bis-[3-(trimethoxysilyl)propyl] methylphosphonate increased the gel time from 6 hours to 6 days. In Example 20, it was found that 1000 ppm of the same compound resulted in a gel time of 14 days.

Examples 21 and 22

Into 917.0 g ethylene glycol were added 52.0 g of a 25% by weight sodium metaborate pentahydrate solution in ethylene glycol. A 33 1/3% aqueous sodium nitrate solution (6.0 g) was added and stirred until well dissolved, followed by 2.0 g of a 50% aqueous solution of sodium tolyltriazole. The pH of the solution was then adjusted to 5.8—5.9 with 25% aqueous caustic solution. Sodium metasilicate pentahydrate was dissolved in 20.0 g water and added to the mixture with stirring to give two levels of silicate. The stability of these solutions at 80°C and 90°C as well as those of similar solutions stabilized by the addition of 0.1% or 1000 ppm of methyl 3-(trimethoxysilyl)propyl methylphosphonate are presented in Table IV.

TABLE IV

10800

| Example | $Na_sSiO_3 \cdot 5H_2O$(%) | Gel time (days) 80°C | 90°C |
|---|---|---|---|
| (Control A) | 0.5 | 2 | 1 |
| 21 (Stabilized A) | 0.5 | 24 | 24 |
| (Control B) | 0.7 | 1 | 1 |
| 22 (Stabilized B) | 0.7 | 3 | 3 |

The above data indicate that while higher levels of sodium silicate (7000 ppm) have a short gel time, they can be improved by the use of the silanes of this invention. With lower levels of silicate (5000 ppm) the silanes of this invention vastly increase the gel time.

Examples 23 and 24

To samples of a commercial antifreeze containing silicates were added sufficient amounts of different stabilizers to yield a 50 ppm solution. The time required for the formation of a visible silica gel in these solutions was determined at 90—95°C. Average gel times, three determinations each, are presented in Table V.

TABLE V

| Example | Stabilizer | Gel time at 90—95°C (hrs) |
|---|---|---|
| Control A | none | 3.0 |
| Control B | Na salt phosphonate functional siliconate (British 2,018,266A) | 7.0 |
| Control C | 3-aminopropyltrimethoxy silane (U.S. 3,121,692) | 3.0 |
| 23 | methyl 3-(trimethoxy silyl propyl methyl phosphonate | 7.7 |
| 24 | bis-[3-(trimethoxy silyl) propyl]methyl phosphonate | 8.0 |

**Claims**

1. A gellation resistant glycol composition comprising

(A) 85 to 98 percent by weight of an alkylene glycol, an alkylene glycol ether, or mixtures thereof,

(B) 0.025 to 1.0 percent by weight of an alkali metal silicate,

(C) 0.001 to 5.0 percent by weight of one of the following:

(I) $(RO)_{3-m}(R')_mSi—R^2—O—P(O)(OR^3)(R^4)$,

(II) $[(RO)_{3-m}(R')_mSi—R^2—O]_2P(O)(R^4)$, or

(III) mixtures of I and II,

wherein m is 0—2

R, $R^3$, $R^4$ are alkyl groups of 1—4 carbons,

R' is an alkyl group of 1—4 carbons, phenyl, and aralkyl group of 7—10 carbons, and

$R^2$ is an alkylene group of 1—4 carbons,

(D) an effective amount of a non-silicate corrosion inhibitor,

(E) water.

2. The composition of Claim 1 wherein the alkylene glycol is ethylene glycol.

3. The composition of Claim 1 wherein the alkylene glycol is propylene glycol.

4. The composition of Claim 1 wherein the alkylene glycol is the monomethyl ether of propylene glycol.

5. A composition as in Claim 1 wherein (A) is an alkylene glycol and also containing an effective amount to reduce corrosion of an alkali metal borate.

6. The composition of Claim 5 wherein R is a methyl group and m is zero.

7. A method for making gellation resistant glycol compositions containing water, alkali metal silicates, and other corrosion inhibitors which comprises adding to the glycol compositions 0.001 to 5.0 percent by weight, to improve gellation resistance, of the compounds, having the formulas,

(I) $(RO)_{3-m}(R')_mSi—R^2—O—P(O)(OR^3)(R^4)$,
(II) $[(RO)_{3-m}(R')_mSi—R^2—O]_2P(O)(R^4)$, or
(III) mixtures of I and II,

wherein m is 0—2
R, $R^3$, $R^4$ are alkyl groups of 1—4 carbons,
R' is an alkyl group of 1—4 carbons, phenyl and aralkyl groups of 7—10 carbons, and
$R^2$ is an alkylene group of 1—4 carbons.

## Patentansprüche

1. Eine gefrierfeste Glykolzusammensetzung, enthaltend:
(A) 85 bis 98 Gew.% Alkylenglykol, Alkylenglykoläther, bzw. Gemische derselben,
(B) 0,025 bis 1,0 Gew.% eines Alkalimetallsilikats,
(C) 0,001 bis 5,0 Gew.% einer der folgenden Verbindungen:

(I) $(RO)_{3-m}(R')_mSi—R^2—O—P(O)(OR^3)(R^4)$
(II) $[(RO)_{3-m}(R')_mSi—R^2—O]_2P(O)(R^4)$, bzw.
(III) Gemische aus I und II,

worin
m=0—2
R, $R^3$, $R^4$: Alkylgruppen mit 1—4 Kohlenstoffatomen
R': eine Alkylgruppe mit 1—4 Kohlenstoffatomen, Phenyl, und eine Aralkylgruppe mit 7—10 Kohlenstoffatomen,
$R^2$: eine Alkylengruppe mit 1—4 Kohlenstoffatomen,
(D) Eine wirksame Menge eines nicht-silikatischen Korrosionhemmers,
(E) Wasser bedeuten.

2. Die Zusammensetzung gemäß Anspruch 1, in der es sich bei dem Alkylenglykol um Ethylenglykol handelt.

3. Die Zusammensetzung gemäß Anspruch 1, in der es sich bei dem Alkylenglykol um Propylenglykol handelt.

4. Die Zusammensetzung gemäß Anspruch 1, in der es sich bei dem Alkylenglykol um Propylenglykol-Monomethyläther handelt.

5. Die Zusammensetzung gemäß Anspruch 1, in der es sich bei (A) um ein Alkylenglykol mit einem wirksamen Gehalt an Alkalimetallborat als Korrosionshemmer handelt.

6. Die Zusammensetzung gemäß Anspruch 5, in der R eine Methylgruppe und m gleich Null ist.

7. Verfahren zur Herstellung gefrierfester Glykolzusammensetzungen mit Wasser, Alkalimetallsilikaten und sonstigen Korrosionshemmern, das darin besteht, daß zwecks Verbesserung der Gefrierfestigkeit den Glykolzusammensetzungen 0,001 bis 5,0 Gew.% der Verbindungen der nachstehenden Formeln zugesetzt werden:

(I) $(RO)_{3-m}(R')_mSi—R^2—O—P(O)(OR^3)(R^4)$
(II) $[(RO)_{3-m}(R')_mSi—R^2—O]_2P(O)(R^4)$ oder
(III) Gemische aus I und II

worin
m=0—2
R, $R^3$, $R^4$: Alkylgruppen mit 1—4 Kohlenstoffatomen,
R': eine Alkylgruppe mit 1—4 Kohlenstoffatomen, Phenyl und eine Aralkylgruppe mit 7—10 Kohlenstoffatomen, und
$R^2$: eine Alkylengruppe mit 1—4 Kohlenstoffatomen.

## Revendications

1. Composition de glycol résistante à la gélification, comprenant:
(A) 85 à 98 pour cent en poids d'un alkylèneglycol, d'un éther d'alkylèneglycol, ou leurs mélanges,
(B) 0,025 à 1,0 pour cent en poids d'un silicate de métal alcalin,
(C) 0,001 à 5,0 pour cent en poids de l'un des éléments suivants:

(I) $(RO)_{3-m}(R')_mSi—R^2—O—P(O)(OR^3)(R^4)$,
(II) $[(RO)_{3-m}(R')_mSi—R^2—O]_2P(O)(R^4)$, ou
(III) des mélanges de I et de II,

formules dans lesquelles:
m va de 0 à 2,
R, $R^3$ et $R^4$ sont des groupes alkyle de 1 à 4 atomes de carbone,
R' est un groupe alkyle de 1 à 4 atomes de carbone, phényle, ou aralkyle de 7 à 10 atomes de carbone, et
$R^2$ est un groupe alkylène de 1 à 4 atomes de carbone,
(D) une quantité efficace d'un inhibiteur de corrosion non silicate,
(E) de l'eau.

2. Composition conforme à la revendication 1, dans laquelle l'alkylèneglycol est l'éthylèneglycol.

3. Composition conforme à la revendication 1, dans laquelle l'alkylèneglycol est le propylèneglycol.

4. Composition conforme à la revendication 1, dans laquelle l'alkylèneglycol est l'éther monométhylique du propylèneglycol.

5. Composition conforme à la revendication 1, dans laquelle (A) est un alkylèneglycol, et qui contient également une quantité, efficace pour réduire la corrosion, d'un borate de métal alcalin.

6. Composition conforme à la revendication 5, dans laquelle R est un groupe méthyle, et m est égal à zéro.

7. Procédé de fabrication de compositions de glycol résistantes à la gélification, contenant de l'eau, des silicates de métal alcalins, et d'autres inhibiteurs de corrosion, qui comprend l'addition aux compositions de glycol, pour en améliorer la résistance à la gélification, de 0,001 à 5,0 pour cent en poids des composés ayant les formules:

(I) $(RO)_{3-m}(R')_mSi—R^2—O—P(O)(OR^3)(R^4)$,
(II) $[(RO)_{3-m}(R')_mSi—R^2—O]_2P(O)(R^4)$, ou
(III) des mélanges de I et de II,

formules dans lesquelles:
m va de 0 à 2,
R, $R^3$ et $R^4$ sont des groupes alkyle de 1 à 4 atomes de carbone,
R' est un groupe alkyle de 1 à 4 atomes de carbone, phényle, ou aralkyle de 7 à 10 atomes de carbone, et
$R^2$ est un groupe alkylène de 1 à 4 atomes de carbone.